Europäisches Patentamt

(19) European Patent Office

Office européen des brevets

(11) Publication number: **0 034 429**
**B1**

(12) **EUROPEAN PATENT SPECIFICATION**

(45) Date of publication of patent specification: **09.02.83**

(51) Int. Cl.³: **A 23 L 3/16**

(21) Application number: **81300417.3**

(22) Date of filing: **02.02.81**

(54) **Heat treatment of particulate solid materials.**

(30) Priority: **15.02.80 GB 8005181**

(43) Date of publication of application:
**26.08.81 Bulletin 81/34**

(45) Publication of the grant of the patent:
**09.02.83 Bulletin 83/6**

(84) Designated Contracting States:
**BE CH DE FR GB LI NL**

(56) References cited:
**DE - A - 2 829 381**
**FR - A - 2 290 163**
**GB - A - 1 445 941**

(73) Proprietor: **THE A.P.V. COMPANY LIMITED**
**Manor Royal**
**Crawley West Sussex RH10 2QB (GB)**

(72) Inventor: **Cattell, Graham Scott**
**Roselea New Chapel Road**
**Lingfield Surrey (GB)**
Inventor: **Murray, Simon Alexander**
**125, Buckswood Drive Gossops Green**
**Crawley Sussex (GB)**

(74) Representative: **Smith, Geoffrey Leonard et al,**
**Marks & Clerk 57/60 Lincoln's Inn Fields**
**London WC2A 3LS (GB)**

Courier Press, Leamington Spa, England

Heat treatment of particulate solid materials

This invention relates to the heat treatment of particulate solids material, particularly food products.

In the heat treatment, i.e. cooking, of food products it is frequently required, particularly in large scale industrial treatment processes, that the solids be separated from the cooking liquid, normally prior to being mixed with a separately prepared liquid, such as a sauce.

One form of heat treating apparatus is a rotary vessel in which the solids material is subjected to a tumbling action while being treated, and also subsequently, while being mixed with a sauce. Such apparatus is for instance described in our United Kingdom patent specification 1 445 941. In that specification, the cooking liquid is described as being drawn off by a pipe which is separate from the main discharge pipe. However, the separation from the solid phase is only effected at the entrance to the draw-off pipe, which may thus become clogged with solids.

According to the present invention, there is provided a rotary vessel for the heat treatment of particulate solids material so shaped as to apply a tumbling action to the solids material as it rotates, the vessel being provided with means for separating liquid from solid and means for drawing off the separated liquid characterised in that the vessel has mounted therein a strainer adapted to be moved between an inoperative position, in which it is clear of the wall of the vessel as the vessel rotates, and an operative position in which it forms an effective barrier against passage of the particular solids materials tumbling along the wall of the vessel, while allowing passage of the liquid material, whereby liquid may be separated from the solids and drawn off while the vessel is stationary.

In order to provide an effective seal against the vessel wall, the wall may be provided with a protruding shelf which overlaps the edge of the strainer when the latter is in the operative position.

The invention will be further described with reference to the accompanying diagrammatic drawings, in which:—

Figure 1 is a sectional view of a vessel according to a preferred form of the invention;

Figure 2 is an elevation and sectional view of the vessel of Figure 1, with some parts omitted; and

Figure 3 is a diagram illustrating the operation.

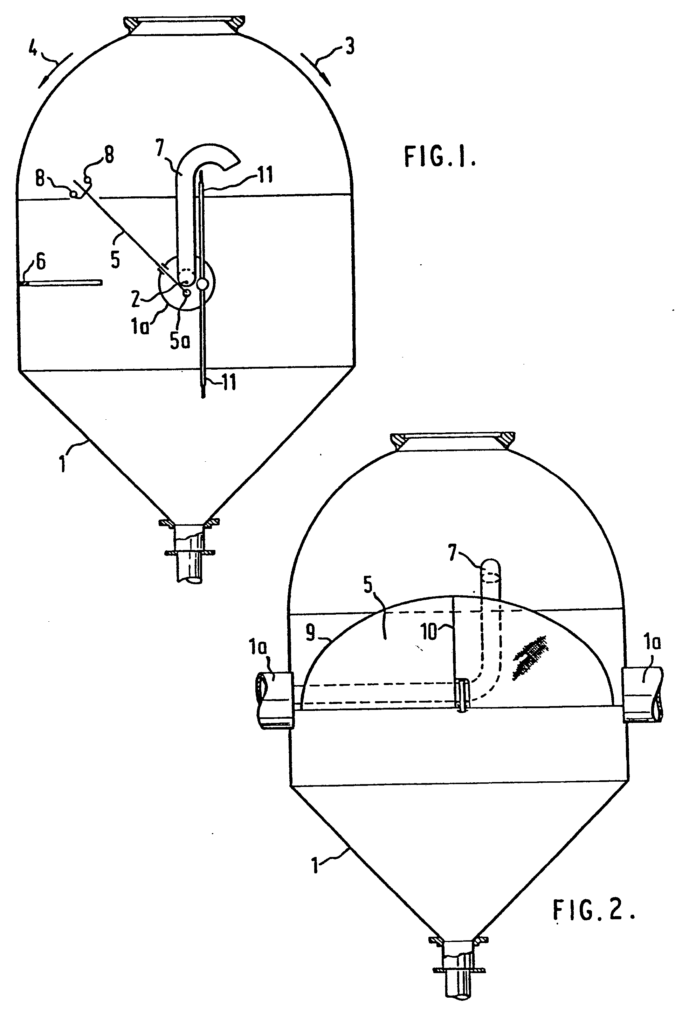

Referring first to Figures 1 and 2, there is shown a vessel 1 which is mounted on hollow trunnions 1a for rotation about an axis 2. It is envisaged that the rotation may in fact be reversible so that during normal heat treatment, the vessel will rotate in the direction indicated by the arrow 3 in Figure 1, but during liquid separation it may be rotated in the reverse or counter-clockwise direction as indicated by the arrow 4.

It will be seen that the vessel is of such a shape that the particulate solids material, and the liquid in which it is suspended, will be subjected to a tumbling action as the vessel rotates, which will ensure adequately even cooking of the particulate solids material by exposure to condensing steam, and will also ensure proper mixing of the particulate solids material with sauces or other liquids added after completion of the heat treatment phase.

After completion of the heat treatment phase, the cooking liquid present will be a mixture of condensate, exudate and probably also additional lubricant liquid added before and particularly during the heat treatment process. Before blending with the sauce this cooking liquid has to be separated from the solids material. For this purpose, there is provided a separating dam or strainer 5 which is mounted within the vessel 1 and operable via one of the trunnions 1a for rotation about its own axis of rotation 5a, which may be coincident with the axis 2 but is preferably offset below the axis 2 as shown. During the heating and blending phases the strainer 5 is in the position illustrated where it is remote from the walls of the vessel and therefore out of contact with the tumbling solid material. Also provided on the wall of the vessel 1 is an internally projecting shelf 6 to overlap the strainer 5 when it is pivoted to operative position to seal against the vessel wall. The vessel also has a supply and/or discharge duct 7 passing through one of the hollow trunnions 1a.

The strainer is provided with spray balls 8 provided for liquid draw-off and also for cleaning the strainer 5 and the interior of the vessel.

It will be seen from Figure 2 that the strainer 5 is provided with a peripheral frame or support ring 9 and a reinforcement 10 also carries a connecting pipe (not shown) for the spray balls 8.

As indicated in Figure 1, temperature probes 11 may be provided.

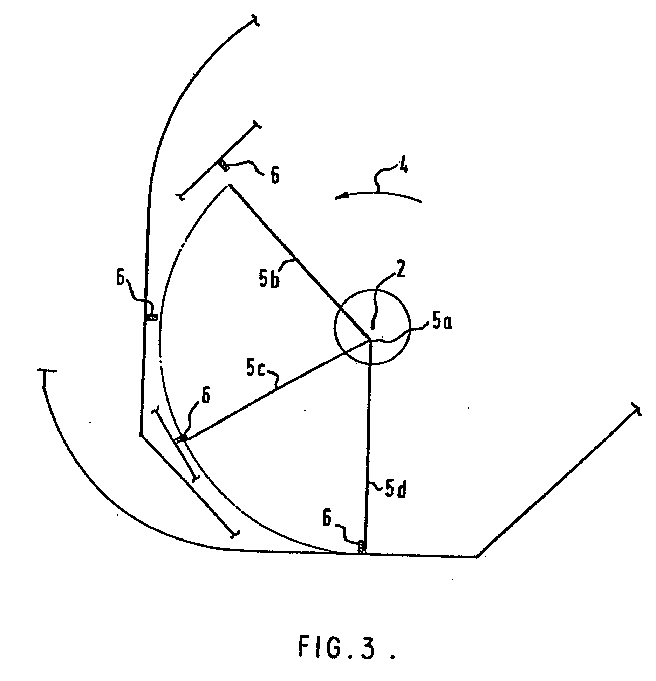

The mode of operation will now be further described with particular reference to Figure 3. During a tumbling operation, the strainer 5 is normally static in a position 5b while the vessel 1 rotates about its axis 2. The offsetting of the axes 2 and 5a enables the shelf 6, which is solid with the wall of the vessel 1, to pass clear of the edge of the strainer 5 as the vessel rotates. For separation, the rotation of the vessel 1 is stopped and the strainer 5 is moved to a position 5c in which it extends downwardly and in which the edge of the strainer 5 is in the path of the shelf 6 so that as the rotation of the vessel 1 is recommenced in the counter-clockwise direction indicated by the arrow 4, the strainer 5 is entrained by the shelf 6 until the position 5d is reached, when rotation is stopped. During this rotation from the position 5c to position 5d, the strainer prevents the solids passing to the left of the strainer, i.e. it effectively pushes them to one side, and the liquid is free to move through the strainer and is drawn off via the spray balls 8. Alternatively, the duct 7 may be rotated to dip into the liquid and to draw it off.

Once the separation has been completed, the strainer is moved back to its normal or inoperative position 5b and the treatment recommenced, e.g. by the introduction into the vessel of a liquid, such as a sauce, to be mixed and blended with the retained solid materials.

The shape of the vessel 1 is not to be limited to the particular shape illustrated.

## Claims

1. A rotary vessel for the heat treatment of particulate solids material so shaped as to apply a tumbling action to the solids material as it rotates, the vessel being provided with means for separating liquid from solid and means for drawing off the separated liquid characterised in that the vessel (1) has mounted therein a strained (5) adapted to be moved between an inoperative position (5b), in which it is clear of the wall of the vessel (1) as the vessel (1) rotates, and an operative position (5c, 5d) in which it forms an effective barrier against passage of the particulate solids materials tumbling along the wall of the vessel (1), while allowing passage of the liquid material, whereby liquid may be separated from the solids and drawn off while the vessel (1) is stationary.

2. A rotary vessel according to claim 1, characterised in that the wall of the vessel (1) is provided with a protruding shelf (6) which overlaps the edge of the strainer (5) when the latter is in the operative position (5c, 5d).

3. A rotary vessel according to claim 1 or 2, characterised in that the strainer (5) is movable about an axis (5a) offset below the axis of rotation (2) of the vessel (1).

4. A rotary vessel according to any of the preceding claims, characterised in that the strainer is provided with means (8) for drawing off liquid.

5. A rotary vessel according to claim 4, characterised in that the drawing off means are in the form of spray balls (8) also usable for cleaning purposes.

## Revendications

1. Récipient rotatif pour le traitement par chauffage de matières solides particulaires, conformé de façon à appliquer une action de culbute à ces matières solides pendant qu'il tourne, ce récipient comportant des organes destinés à séparer le liquide desdites matières solides et des organes destinés à soutirer le liquide séparé, et étant caractérisé en ce qu'il comporte intérieurement un filtre (5) pouvant être déplacé entre une position inactive (5b) dans laquelle il est dégagé de la paroi de ce récipient (1) pendant que celui-ci tourne, et une position active (5c, 5d), dans laquelle il forme une barrière s'opposant efficacement au passage des matières solides particulaires qui culbutent le long de cette paroi du récipient, tout en permettant aux matières liquides de passer, si bien que ces matières liquides peuvent être séparées des matières solides et soutirées pendant que ledit récipient (1) est immobilisé.

2. Récipient rotatif selon la revendication 1, caractérisé en ce que la paroi de ce récipient (1) présente une barrette saillante (6), qui passe au-delà du bord du filtre (5) lorsque ce dernier occupe sa position active (5c, 5d).

3. Récipient rotatif selon la revendication 1 ou 2, caractérisé en ce que le filtre (5) est mobile autour d'un axe (5a) qui est déporté au-dessous de l'axe de rotation (2) de ce récipient (1).

4. Récipient rotatif selon l'une quelconque des revendications précédentes, caractérisé en ce que le filtre comporte des moyens (8) destinés à soutirer le liquide.

5. Récipient rotatif selon la revendication 4, caractérisé en ce que les moyens de soutirage sont des sphères d'aspersion (8) utilisables aussi aux fins de nettoyage.

## Patentansprüche

1. Rotierender Behälter zur Wärmebehandlung von körnigen Feststoffen, der so geformt ist, daß die Feststoffe bei der Rotation durcheinanderstürzen und der eine Einrichtung zum Trennen von Flüssigkeiten und Feststoffen sowie eine Einrichtung zum Abzug der abgetrennten Flüssigkeit aufweist, dadurch gekennzeichnet, daß im Behälter (1) ein Sieb (5) angeordnet ist, das zwischen einer Ruhestellung (5b) in der es bei Rotation des Behälters (1) frei von dessen Wandung ist, und einer Betriebsstellung (5c, 5d) bewegbar ist, bei der es eine wirksame Schranke für die an der Wandung des Behälters (1) entlangstürzenden Feststoffe bildet, aber den Durchgang von Flüssigkeit zuläßt, wobei die von den Feststoffen getrennte Flussigkeit bei stillstehendem Behälter (1) abziehbar ist.

2. Behälter nach Anspruch 1, dadurch gekennzeichnet, daß die Wandung des Behälters (1) eine vorstehende Kante (6) aufweist, die den Rand des Siebes (5) überlappt, wenn dieses sich in Betriebstellung (5c, 5d) befindet.

3. Behälter nach Anspruch 1 oder 2, dadurch gekennzeichnet, daß das Sieb um eine Achse (5a) bewegbar ist, wenn die sich außerhalb der Rotationsachse (2) des Behälters (1) befindet.

4. Behälter nach einem der vorangehenden Ansprüche, dadurch gekennzeichnet, daß das Sieb (5) mit einer Einrichtung (8) zum Abzug von Flüssigkeit versehen ist.

5. Behälter nach Anspruch 4, dadurch gekennzeichnet, daß die Einrichtung zum Abzug von Flüssigkeit aus Sprühdüsen (8) besteht und auch für Reinigungszwecke einsetzbar ist.

FIG. I.

FIG. 2.

FIG.3.